# EUROPEAN PATENT SPECIFICATION

(11) **EP 3 653 450 B1**
(45) Date of publication and mention of the grant of the patent: **29.12.2021**
(21) Application number: 19209118.9
(22) Date of filing: 14.11.2019
(51) Int. Cl.: B60R 19/56, B62D 21/15, B65F 3/04

(54) **DRIVE-UNDER GUARD**
UNTERFAHRSCHUTZ
PROTECTION ANTIENCASTREMENT

(30) Priority: 16.11.2018 FI 20185969
(43) Date of publication of application: 20.05.2020
(73) Proprietor: Ab Närpes Trä & Metall - Oy Närpiön Puu ja Metalli, 64200 Närpes (FI)
(72) Inventor: Schernes, Dirk, 27793 Wildeshausen (DE); Stöver, Hans-Jürgen, 27793 Wildeshausen (DE)
(74) Representative: Kolster Oy Ab

(56) References cited:
- EP-A1- 2 133 288
- EP-A2- 2 886 492
- JP-A- S5 977 945
- US-A1- 2017 036 628

## Description

### Technical area

The present invention relates to a refuse collection vehicle with a side underrun guard of the type stated in the ingress to patent claim 1.

### Prior art

The use of side-loading lifting devices featuring a lifting mechanism that is articulated in relation to the refuse collection vehicle is already known. When emptying a refuse bin, such a lifting mechanism is engaged with the refuse bin, which is then lifted above a hopper provided by the refuse collection container of the collection vehicle. In a rest position thereof, the lifting device takes up a position next to a sidewall of the refuse collection vehicle.

In certain situations, the lifting device has proven not to provide adequate protection in the event of a collision or other accident striking the vehicle laterally. Document JP S59 77945 A discloses a vehicle with a side underrun guard substantially according to the preamble of claim 1.

### Presentation of the problem

Using the present invention, the problems inherent in known solutions can essentially be avoided. Hereby, the purpose of the invention is to provide a constructive solution that offers appropriate protection in various conceivable accident situations.

The invention achieves this by a refuse collection vehicle with a side underrun guard, according to the invention, being given the characteristics stated in claim 1. The subsequent, dependent claims set out appropriate, further developments and variants of the invention that further improve its functionality.

In the following description, terms such as "between", "outside", "behind", etc. denote directions in relation to the side underrun guard or its design details as they are shown in the attached figures.

Using the guard described in the present invention has several significant advantages over the prior art. For example, while refuse bins can still be handled flexibly by the lifting device of the refuse collection vehicle, improved traffic safety is possible.

Owing to its foldable design, the side underrun guard according to the invention occupies the least possible space and thus does not influence the refuse collection vehicle's overall design to any significant extent. It is even possible to mount the guard with the present lifting devices in active operation.

Further advantages and details of the invention are more closely set out in the description below.

### Summary of drawing figures

In the following, the invention is described more closely with reference to the drawings, in which:
Figure 1 shows an axonometric view (from above and behind) of a refuse collection vehicle;
Figure 2 shows a cross section, at the side-located lifting device, of a refuse collection vehicle according to figure 1;
Figure 3 is a detail view corresponding to figure 2 and shows, in a driving position, a side underrun guard according to the invention;
Figures 4 and 5 show the function of a side underrun guard according to figure 3 when the bin holder is displaced towards a loading position thereof; and,
Figure 6 shows a side underrun guard according to figure 3 with the bin holder in a loading position thereof.

### Preferred embodiment

The above-mentioned figures are not a to-scale depiction of the side underrun guard. Their sole purpose is to illustrate the construction solutions of the preferred embodiments and said the function of these embodiments. Hereby, the individual design elements that are each shown and labelled with a reference number in the attached figures, correspond to the design solutions presented, with corresponding reference numbers, in the description given below.

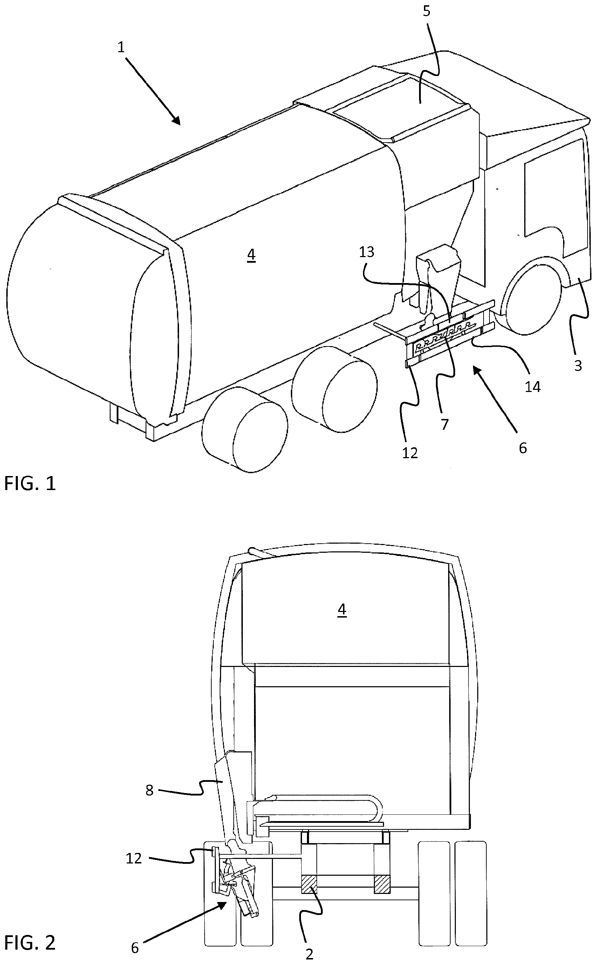

Figures 1 and 2 are a schematic depiction of a refuse collection vehicle 1 comprising a chassis 2 and a driver's cab 3. The figure also shows a collection container 4 for carrying waste from a collection point to a processing plant. Via the use of partition walls, the collection container can be divided into one or more chambers. The collection container further has a feed opening into which are tipped the contents of a refuse bin that is being emptied. In Figure 1, this feed opening is protected by a hatch 5.

To feed the emptied waste into the collection container 4, the refuse collection vehicle 1 has at least one compactor. The collection container has a hopper for each of the collection container's chambers. Collection container, hopper and compactor are all of a conventional design and are thus not described in more detail in this context.

To supply the collection container 4 with waste, the refuse collection vehicle 1 has at least one side-mounted bin lift 6 with which refuse bins can be tipped into a hopper. Such a bin lift includes a bin holder 7 that is advantageously arranged to be articulated in relation to the collection container of the refuse collection vehicle.

As shown in Figures 1 and 2, the bin lift 6 is arranged at the side of the refuse collection vehicle 1. Hereby, the bin lift can be moved laterally to the vehicle as well as away from the vehicle, as known per se, by a lifting mechanism 8 provided by the bin lift and arranged between the refuse collection vehicle and the bin holder 7.

Hereby, the bin holder 7 is provided with a body 9 that features a cam 10. In an emptying position of the refuse collection vehicle, the cam is in an essentially vertical position. The cam has gripping units 11 projecting therefrom. With these gripping units, the bin holder is arranged to interact with lifting mountings provided by the refuse bin that is brought to the refuse collection vehicle. When the gripping units are manoeuvred to engage with the lifting mounts, the lifting mechanism 8 can lift/swing the refuse bin relative to the collection container 4 in an essentially vertical direction and then empty it into the hopper in question.

To form an essentially continuous side underrun guard 12 along the side of the collection vehicle, both the bin holder 7 and the lifting mechanism 8 each has their essentially horizontal side beam section. These side beam sections interact with that part of the side underrun guard that is fastened essentially rigidly to the chassis 2 of the vehicle. See, for example, Figure 1. Hereby, the bin holder has an upper side beam section 13, which is fastened essentially rigidly to the lifting mechanism at its upper edge. The bin holder also has a lower side beam section 14, which is arranged to be displaceable in relation to the body 9 of the bin holder.

Hereby, the lower side beam section 14 is linked to the body 9 of the bin holderby at least one pivot arm 15. Such pivot arms are linked, via articulation, to the lower edge 16 of the lower side beam section and to the body of the bin holder. The pivot arms furthermore project from their respective articulation point 17 on the body of the bin holder, so that they each link to an actuation means 18, which could be, for example, a pneumatic or hydraulic cylinder. An actuation of this actuation means causes the pivot arm to rotate around an articulation point thereof on the body of the bin holder. As a result of this rotary motion, the lower side beam section 14 can be displaced relative to the body of the bin holder. At least one damping device 19, which links the upper edge 20 of the lower side beam section 14 to the pivot arm 15, is arranged to regulate a motion geometry of the lower side beam section so that the side beam section can maintain its orientation essentially parallel to the body 9 of the bin holder.

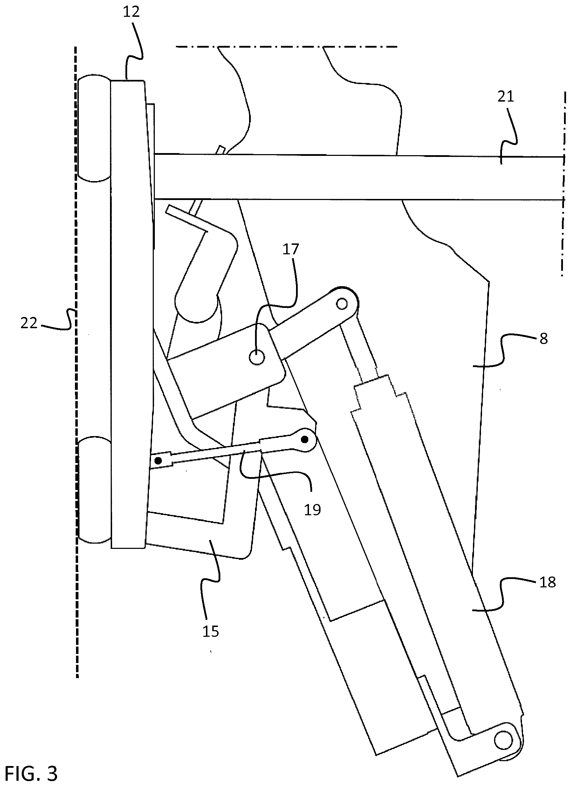

The function of the present embodiment of the side underrun guard can best be described by referring to Figures 3 - 6.

Figure 3 shows the side underrun guard 12 of the refuse collection vehicle, which is joined to the chassis of the vehicle via a support beam 21. The figure also schematically shows the bin lift 6 with the bin holder 7 and lifting mechanism 8 thereof, which, in this transport position and when looking at the vehicle from the side, is behind the side underrun guard. See Figure 1.

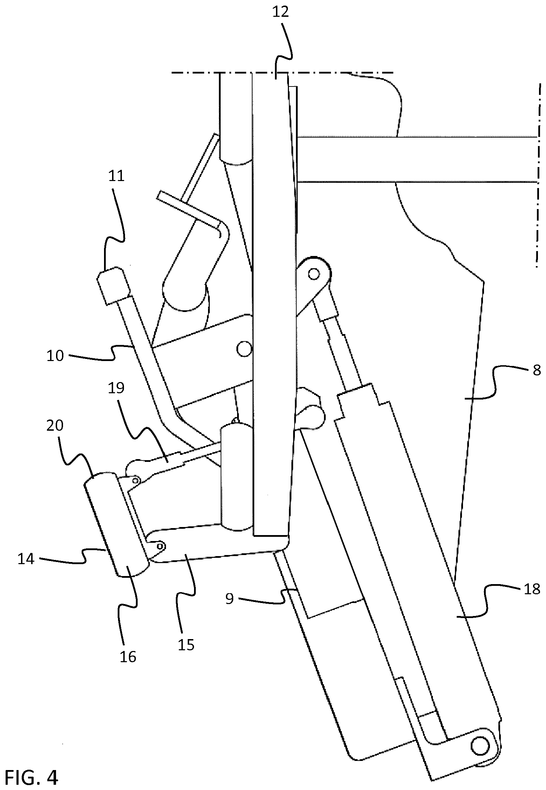

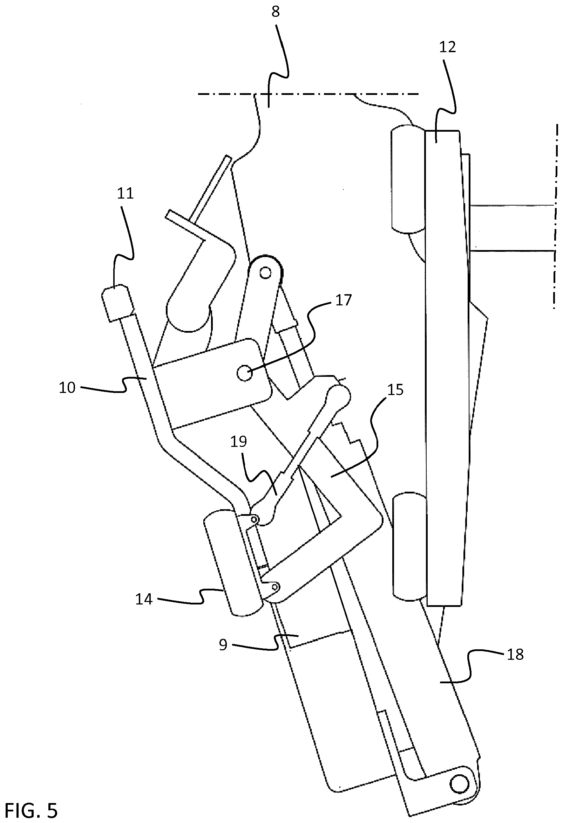

Figure 4 shows a working position where the bin lift 6 has been started and the lifting mechanism 8 has moved the bin holder partially outside the protective plane 22 formed by the side underrun guard 12. At the same time, via pivot arm 15, the displacement device 18 is brought to rotate the lower side beam section 14 to release the bin holder on its way towards a loading position thereof. The rotation in the lower side beam section is simultaneously regulated by the damping device 19, which, along with the pivot arm, manoeuvres the lower side beam section towards a position at the body 9 of the bin holder. See Figure 5.

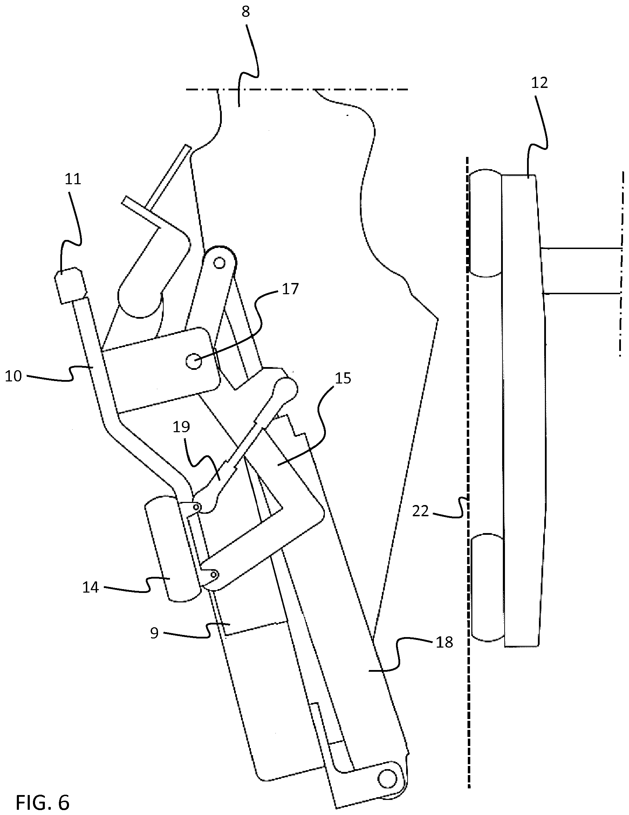

The lifting mechanism 8 continues to push the bin holder 7 outside the side underrun guard 12 to finally take up a loading position according to Figure 6. Hereby, the bin holder is entirely outside the protective plane 22 formed by the side underrun guard. The lower side beam section, manoeuvred by the pivot arm 15 and the damping device 19, is now in a position against the body 9 of the bin holder. Thus, in this position, the cam 10 and gripping units 11 of the bin holder are released for loading. See Figure 6.

## Claims

1. Refuse collection vehicle comprising
at least one side-mounted bin lift (6) provided with a bin holder (7) and a lifting mechanism (8), and
a side underrun guard (12), a part of which is arranged to be articulated in relation to the refuse collection vehicle, whereby
the side underrun guard has two essentially horizontal side beam sections arranged to the bin lift (6),
said side beam sections being arranged to interact with the side underrun guard fastened essentially rigidly to the refuse collection vehicle forming an essentially continuous side underrun guard (12),
**characterised in that**
the bin holder (7) as well as the lifting mechanism (8) comprise an essentially horizontal side beam section each, whereby
the lifting mechanism (8) comprises an upper side beam section (13), fastened essentially rigidly thereto, and
the bin holder (7) comprises a lower side beam section (14), arranged to be displaceable in relation to a body (9) of the bin holder,
at least one pivot arm (15) being arranged to cause a rotation of the lower side beam section (14) and release a cam (10) provided in the bin holder for loading.

2. Refuse collection vehicle according to claim 1, **characterised in that** the pivot arm (15) is arranged to be manoeuvred by an actuation means (18).

3. Refuse collection vehicle according to claim 2, **characterised in that** the rotation in the lower side beam section (14) is arranged to be regulated by at least one damping device (19) arranged to manoeuvre, jointly with the pivot arm (15), the lower side beam section to a position at the body (9)of the bin holder.

## Patentansprüche

1. Abfallsammelfahrzeug, das Folgendes umfasst
mindestens einen an der Seite montierten Mülltonnenheber (6), der mit mindestens einem Mülltonnenhalter (7) und einem Hebemechanismus (8) ausgerüstet ist, und
einen seitlichen Unterfahrschutz (12), von dem ein Teil mit Bezug auf das Abfallsammelfahrzeug angelenkt ist, wobei
der seitliche Unterfahrschutz zwei im Wesentlichen horizontale Seitenträgerabschnitte aufweist, die am Mülltonnenheber (6) angeordnet sind,
wobei die Seitenträgerabschnitte angeordnet sind, um mit dem seitlichen Unterfahrschutz, der im Wesentlichen starr am Abfallsammelfahrzeug befestigt ist, zu interagieren, um einen im Wesentlichen durchgehenden seitlichen Unterfahrschutz (12) zu bilden,
**dadurch gekennzeichnet, dass**
der Mülltonnenhalter (7) wie auch der Hebemechanismus (8) jeweils einen im Wesentlichen horizontalen Seitenträgerabschnitt umfassen, wobei
der Hebemechanismus (8) einen oberen Seitenträgerabschnitt (13) umfasst, der im Wesentlichen starr daran befestigt ist, und
der Mülltonnenhalter (7) einen unteren Seitenträgerabschnitt (14) umfasst, der angeordnet ist, mit Bezug auf einen Körper (9) des Mülltonnenhalters versetzbar zu sein,
wobei mindestens ein Schwenkarm (15) angeordnet ist, eine Drehung des unteren Seitenträgerabschnitts (14) zu bewirken und einen Nocken (10), der im Mülltonnenhalters bereitgestellt ist, zum Laden zu lösen.

2. Abfallsammelfahrzeug nach Anspruch 1, **dadurch gekennzeichnet, dass** der Schwenkarm (15) angeordnet ist, durch ein Betätigungsmittel (18) manövriert zu werden.

3. Abfallsammelfahrzeug nach Anspruch 2, **dadurch gekennzeichnet, dass** die Drehung des unteren Seitenträgerabschnitts (14) angeordnet ist, durch mindestens eine Dämpfungsvorrichtung (19) reguliert zu werden, die angeordnet ist, den unteren Seitenträgerabschnitt zusammen mit dem Schwenkarm (15) zu einer Position am Körper (9) des Mülltonnenhalters zu manövrieren.

## Revendications

1. Véhicule de collecte de déchets comprenant :
au moins un dispositif élévateur pour poubelle (6) monté sur le côté, prévu avec un support de poubelle (7) et un mécanisme de levage (8) ; et
une protection antiencastrement latérale (12) dont une partie est agencée pour être articulée par rapport au véhicule de collecte de déchets, moyennant quoi :
la protection antiencastrement latérale a deux sections de poutre latérales essentiellement horizontales agencées sur le dispositif élévateur pour poubelle (6),
lesdites sections de poutre latérales étant agencées pour interagir avec la protection antiencastrement fixée de manière essentiellement rigide au véhicule de collecte de déchets formant une protection antiencastrement latérale (12) essentiellement continue,
**caractérisé en ce que** :
le support de poubelle (7) ainsi que le mécanisme de levage (8) comprennent chacun une section de poutre latérale essentiellement horizontale, moyennant quoi :
le mécanisme de levage (8) comprend une section de poutre latérale supérieure (13), fixée de manière essentiellement rigide à ce dernier, et
le support de poubelle (7) comprend une section de poutre latérale inférieure (14) agencée pour pouvoir être déplacée par rapport à un corps (9) du support de poubelle,
au moins un bras de pivot (15) étant agencé pour provoquer une rotation de la section de poutre latérale inférieure (14) et libérer une came (10) prévue dans le support de poubelle pour le chargement.

2. Véhicule de collecte de déchets selon la revendication 1, **caractérisé en ce que** le bras de pivot (15) est agencé pour être manœuvré par un moyen d'actionnement (18).

3. Véhicule de collecte de déchets selon la revendication 2, **caractérisé en ce que** la rotation dans la section de poutre latérale inférieure (14) est agencée pour être régulée par au moins un dispositif d'amortissement (19) agencé pour manœuvrer, conjointement avec le bras de pivot (15), la section de poutre latérale inférieure dans une position au niveau du corps (9) du support de poubelle.
